# EUROPÄISCHE PATENTSCHRIFT

(11) **EP 1 455 983 B1**
(45) Veröffentlichungstag und Bekanntmachung des Hinweises auf die Patenterteilung: **09.07.2008**
(21) Anmeldenummer: 02792792.0
(22) Anmeldetag: 22.11.2002
(51) Int. Cl.: B23K 11/25

(54) **VERFAHREN UND VORRICHTUNG ZUR ERFASSUNG UND AUSWERTUNG VON PROZESSDATEN**
METHOD AND DEVICE FOR DETECTING AND EVALUATING PROCESS DATA
PROCEDE ET DISPOSITIF DE DETECTION ET D'EVALUATION DE DONNEES DE PROCESSUS

(30) Priorität: 12.12.2001 DE 10161087
(43) Veröffentlichungstag der Anmeldung: 15.09.2004
(73) Patentinhaber: Volkswagen Aktiengesellschaft, 38436 Wolfsburg (DE)
(72) Erfinder: MÜLLER, Frank, 30175 Hannover (DE); HOLWEG, Jörg, 38442 Wolfsburg (DE)
(74) Vertreter: Schippan, Ralph
(86) Internationale Anmeldenummer: PCT/EP2002/013130
(87) Internationale Veröffentlichungsnummer: WO 2003/050478

(56) Entgegenhaltungen:
- EP-A- 0 373 422
- DE-A- 19 743 600
- THOEN JNULL ET AL: "STATISTICAL SOUND ANALYSIS: A VALUABLE APPROACH FOR ENVIRONMENTAL NOISE EVALUATION MONITORING IN ENVIRONMENTAL CONTROL" JOURNAL A, SOFT VISION, BRUSSELS, BE, Bd. 33, Nr. 3, 1. Oktober 1992 (1992-10-01), Seiten 123-126, XP000322822 ISSN: 0771-1107

## Beschreibung

Die Erfindung betrifft ein Verfahren zu Erfassung und Auswertung von Prozessdaten, bei dem von einer Vielzahl von Prozessen ein Verlauf eines Messwertes zumindest eines Prozessparameters über eine Laufvariable erfasst wird und bei dem die erfassten Messwertverläufe gespeichert werden. Darüber hinaus betrifft die Erfindung eine Vorrichtung zur Erfassung und Auswertung von Prozessdaten mit zumindest einem Sensor zur Erfassung eines Messwertes zumindest eines Prozessparameters über eine Laufvariable und mit Speichermitteln zum Speichern der erfassten Messwerte. Des Weiteren betrifft die Erfindung eine Verwendung eines erfindungsgemäßen Verfahrens und einer erfindungsgemäßen Vorrichtung.

Heutzutage ist es üblich, Prozessparameter von Produktionsprozessen zu erfassen. Dazu werden Messwerte während des Prozesses mit Hilfe von Sensoren erfasst. Die erfassten Messwerte können abgespeichert und graphisch dargestellt werden. Die Messkurve erlaubt eine Aussage über den Verlauf des Prozessparameters über eine Laufvariable, beispielsweise die Zeit. Um eine Aussage über die Qualität eines Prozesses treffen zu können, ist der Verlauf der Messkurve hilfreich. Es ist bekannt, dass der Verlauf eines Prozessparameters innerhalb eines gewissen Toleranzbandes sich befinden muss, damit das Ergebnis des Prozesses zufrieden stellend ist. Dazu wird bei herkömmlichen Verfahren ein Toleranzband festgelegt, innerhalb dessen sich der Verlauf des Prozessparameters befinden muss. Liegt der Prozessparameter außerhalb des Toleranzbandes, ist es wahrscheinlich, dass das hergestellte Werkstück fehlerhaft ist.

Nachteilig an dem bekannten Verfahren ist, dass die Lage des Toleranzbandes schwierig einzustellen ist. Da das Toleranzband manuell eingestellt werden muss, kann eine Aussage über die Qualität des Prozesses mit Hilfe des Toleranzbandes fehlerhaft sein. Wird das Toleranzband zu groß gewählt, so liegen fast alle Prozesse innerhalb dieses Toleranzbandes. Wird das Toleranzband zu klein gewählt, so ergibt sich eine große Anzahl an möglicherweise fehlerhaften Bauteilen. Fehler bei der Einstellung des Toleranzbandes verursachen daher entweder eine zu hohe Ausschussrat oder eine geringe Qualität der Produkte.

Aus der Druckschrift EP 0 373 422 A ist ein Verfahren zur Erfassung und Auswertung bekannt, bei dem von einer Vielzahl von Prozessen ein Verlauf eines Messwertes zumindest eines Parameters erfasst wird und diese gespeichert werden.

Daher ist es eine Aufgabe der Erfindung, eine verlässliche und selbst lernende Erfassung und Auswertung von Prozessdaten zu gewährleisten.

Die zuvor hergeleitete und aus dem Stand der Technik bekannte Aufgabe wird erfindungsgemäß dadurch gelöst, dass aus den erfassten Messwertverläufen eine Kurvenschar ermittelt wird und dass Häufigkeitsverteilungen der Messwerte innerhalb von Intervallen der Laufvariable aus der Kurvenschar errechnet werden.

Prozesse sind Produktionsprozesse, bei denen Werkstücke bearbeitet werden. Bei der Bearbeitung der Werkstücke lassen sich Messwerte erfassen, die einzelne Prozessparameter symbolisieren. Die gemessenen Messwerte können dabei beispielsweise Spannungen, Widerstände, Kräfte, Drehmomente, Lichtstärken, Plasmastärken und weitere messbare physikalische Größen sein. Diese Messwerte lassen sich über eine Laufvariable, beispielsweise Zeit, Strecke oder Winkel, erfassen.

Um die Messwertverläufe im Nachhinein auswerten zu können, müssen diese gespeichert werden. Bevorzugt ist dabei eine Speicherung von digitalen Daten auf einem digitalen Datenträger. Für festgelegte Intervalle der Laufvariablen werden die jeweils gemessenen Messwerte gespeichert und können im Nachhinein abgerufen werden.

Die erfassten Messwertverläufe ergeben in ihrer Gesamtheit eine Kurvenschar. Da bei Prozessen die Prozessparameter nahezu immer variieren, sind die Messwertverläufe für jeden Prozess verschieden und ergeben in ihrer Gesamtheit eine Kurvenschar.

Für jedes Intervall der Laufvariablen lässt sich bestimmen, wie häufig ein Messwert einen bestimmten Wertebereich erreicht. Aus der Vielzahl der gemessenen Messwertverläufe lässt sich dann eine Häufigkeitsverteilung ermitteln. Diese Häufigkeitsverteilung gibt Auskunft darüber, wie häufig ein Messwertbereich innerhalb eines Intervalls der Laufvariable erreicht worden ist.

Durch fortdauernde Erfassung der Prozessparameter wird die Häufigkeitsverteilung ständig neu berechnet, und es ergibt sich ein adaptiver Verlauf der Häufigkeitsverteilung über die Laufvariable. Verändern sich Prozessparameter während eines Herstellungszyklusses in eine bestimmte Richtung, so spiegelt sich dies in einer Verschiebung der Häufigkeitsverteilung wider.

Der Vorteil der Erfindung besteht darin, dass durch das Verfahren ein adaptiver Verlauf der Häufigkeitsverteilung errechenbar ist. Die Häufigkeitsverteilung wird ständig an die tatsächlichen Prozessverläufe angepasst. Dadurch ist es mit einfachen Mitteln möglich, einzelne Prozesse im Bezug auf ihre Prozessstabilität und der Gesamtheit aller Prozesse zu vergleichen und Schwachstellen schnell zu identifizieren. Dabei kann jeder einzelne Prozess als "normal", also innerhalb eines häufig erreichten Wertbereiches, oder "unnormal", innerhalb eines weniger häufigen Randbereiches, identifiziert werden. Für eine Online- oder nachträgliche Begutachtung eines Prozesses ergibt sich bei einer Visualisierung eines einzelnen Messwertverlaufes gegenüber einer Häufigkeitsverteilung mit einem Blick, ob der Prozess in Ordnung oder fehlerhaft war.

Vorteilhaft ist ebenfalls, dass aus der Kurvenschar ein Streuband des Messwertes ermittelt wird. Mit Hilfe des Streubandes lässt sich festlegen, in welchen Grenzen der Prozessparameter variiert.

Um möglichst schnell einen einzelnen Prozess bewerten zu können, wird vorgeschlagen, dass ein Messwertverlauf eines Prozessparameters eines Prozesses innerhalb der errechneten Häufigkeitsverteilung dargestellt wird. Das hat zum Vorteil, dass ein einzelner Prozess mit einer Vielzahl von vorher durchgeführten Prozessen verglichen werden kann und der Verlauf seines Prozessparameters im Bezug auf vorherige Verläufe von Prozessparametern beurteilt werden kann.

Bei einer graphischen Darstellung der Häufigkeitsverteilung, beispielsweise durch farbliche Hervorhebung von häufig erreichten Messwerten, ergibt sich eine vorteilhafte Ausgestaltung.

Eine Qualitätssicherung ist beispielsweise dadurch möglich, dass aus einem Vergleich zwischen einem Verlauf eines Messwertes, eines Prozessparameters, eines Prozesses und einem Verlauf der errechneten Häufigkeitsverteilung eine Prozessgüte ermittelt wird. Die Prozessgüte kann beispielsweise dadurch ermittelt werden, dass die Abweichung des Verlaufs des Messwertes von dem Verlauf des am häufigsten erreichten Messwertes ermittelt wird und die Gesamtabweichung die Prozessgüte bestimmt.

Vorteilhaft ist das erfindungsgemäße Verfahren, wenn bei einem Widerstandspunktschweißen der Widerstandsverlauf des Schweißpunktes über die Zeit erfasst wird oder wenn bei einem Plasmaschweißen der Verlauf der Plasmastrahlung über den Weg erfasst wird, wenn bei einem Schraubprozess der Verlauf des Drehmomentes über den Drehwinkel erfasst wird. Diese genannten Prozesse stellen vorteilhafte Ausgestaltungen des erfindungsgemäßen Verfahrens dar. Das erfindungsgemäße Verfahren lässt sich jedoch auch auf eine Vielzahl anderer Prozesse anwenden. Die Prozessparameter müssen lediglich mit Hilfe geeigneter Sensoren erfassbar sein.

Es wird bevorzugt, dass die Prozesse eines bestimmten Intervalls, beispielsweise eines Tages, einer Woche oder eines Monats, in einer Häufigkeitsverteilung dargestellt werden. Dadurch lassen sich Aussagen über die Prozessgüte der Prozesse innerhalb des bestimmten Intervalls treffen.

Ein weiterer Gegenstand der Erfindung ist eine Vorrichtung zur Erfassung und Auswertung von Prozessdaten gemäß Anspruch 8.

Als Sensor kommen für die erfindungsgemäße Vorrichtung jegliche Sensoren in Betracht, mit denen sich physikalische Werte, die Prozessparameter repräsentieren, messen lassen. Die Speichermittel sind vorteilhafterweise digitale oder analoge Speichermedien. Auch Ringspeicher sind bevorzugt. Die Speichermittel erlauben sowohl Lese- als auch Schreibvorgänge. Die Berechnungsmittel lesen aus den Speichermitteln die Verläufe der Messwerte einzelner Parameter aus und ermitteln dann Häufigkeitsverteilungen der Messwerte über die Laufvariable. Das bedeutet, dass die Häufigkeitsverteilung von Messwerten innerhalb von Messwertbereichen innerhalb von Intervallen der Laufvariablen ermittelt werden. Die Berechnungsmittel berechnen beispielsweise nach jedem erfassten Prozess die Häufigkeitsverteilung erneut, so dass der Verlauf der Häufigkeitsverteilung adaptiv ist.

Bevorzugt wird, dass Visualisierungsmittel zur Visualisierung der errechneten Häufigkeitsverteilung und/oder eines Verlaufs eines Prozessparameters eines ausführbaren Prozesses vorgesehen sind. Die Visualisienmgsmittel sind vorteilhafterweise Monitore, auf denen sich die Häufigkeitsverteilungen und die Verläufe der Prozessparameter graphisch darstellen lassen. Auch lassen sich auf den Computermonitoren einzelne Prozesse, die beispielsweise durch Prozessidentifikationen identifizierbar sind, auswählen und die Verläufe ihrer Messwerte im Bezug auf die Verläufe der Häufigkeitsverteilungen darstellen.

Ein weiterer Gegenstand der Erfindung ist die Verwendung eines vorbeschriebenen Verfahrens oder einer vorbeschriebenen Vorrichtung in der Qualitätssicherung und/oder in der Kraftfahrzeugsproduktion.

Die Erfindung wird im Folgenden anhand einer ein Ausführungsbeispiel zeigenden Zeichnung näher erläutert. In der Zeichnung zeigt
- Figur 1a bis d: das Ergebnis eines erfindungsgemäßen Verfahrens,
- Figur 2: die Darstellung von Prozessparametern.

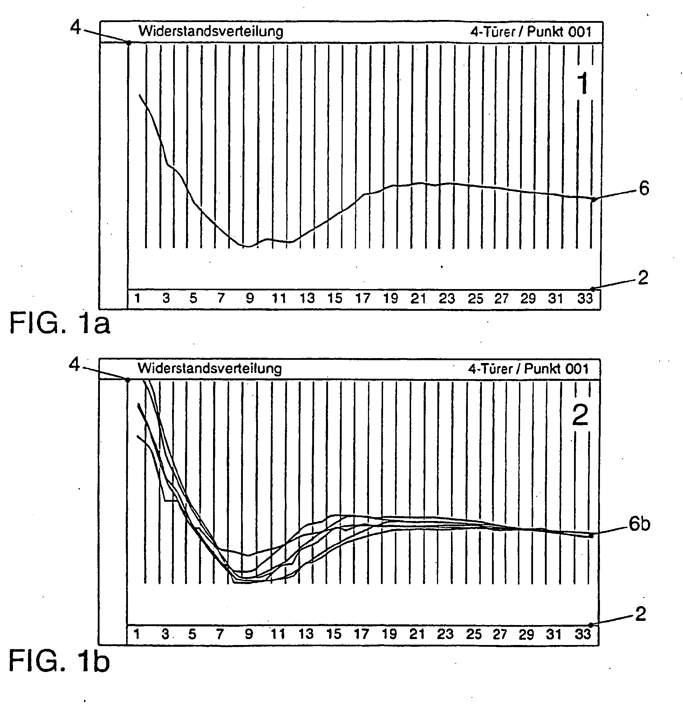

In Figur 1a bis d sind die einzelnen Verfahrensschritte dargestellt. In Figur 1a ist der Verlauf 6 eines Messwertes eines Prozessparameters 4 über eine Laufvariable 2 dargestellt. Der Prozessparameter 4 ist hierbei der Widerstand eines Widerstands-Schweißmesspunktes, und die Laufvariable 2 ist hierbei die Zeit. Zu erkennen ist, dass der Messwert 6 im Laufe der Zeit 2 variiert. Das hat damit zu tun, dass sich der Widerstand der Schweißnaht während des Schweißprozesses verändert. Aus dem Verlauf eines einzelnen Messwertes. 6 ist keine Aussage über die Qualität des Schweißpunktes möglich.

In Figur 1b ist der Verlauf einer Vielzahl von Messwerten 6b dargestellt. Zu erkennen ist, dass diese im Laufe der Zeit voneinander abweichen. Eine Variation der verschiedenen Messwerte 6b über die Zeit kommt bei allen Prozessen vor, da die äußeren Bedingungen unterschiedlich sind. Zu erkennen ist, dass die Qualität der einzelnen Schweißpunkte unterschiedlich sein muss, da der Verlauf des Widerstandes unterschiedlich ist.

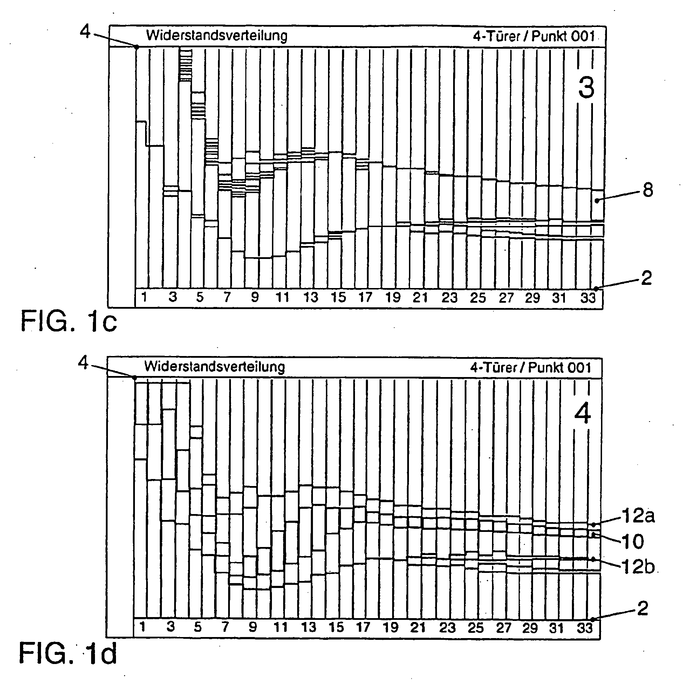

In Figur 1c ist der Verlauf einer Vielzahl von Messkurven in Form eines Streubandes 8 dargestellt. Diese Kurvenschar zeigt die Bandbreite, mit der Prozessparameter variieren können. Auch aus dem Streuband lässt sich noch keine Aussage über die Qualität eines einzelnen Messwertes treffen.

In Figur 1d ist eine Häufigkeitsverteilung dargestellt, die aus einem Kernbereich 10 und den oberen und unteren Grenzen 12a, 12b besteht. Die Häufigkeitsverteilung ist aus der Gesamtheit aller Messkurven 6b ermittelt worden. Dabei wurden Intervalle innerhalb des Prozessparameters 4 festgelegt. Danach wurde ermittelt, wie häufig Messwerte einzelner Prozesse innerhalb der einzelnen Messwertbereiche des Prozessparameters 4 zu bestimmten Zeitpunkten lagen. Je mehr Messpunkte innerhalb der einzelnen Messwertbereiche lagen, desto heller ist die Häufigkeitsverteilung dargestellt. Im hellen Kernbereich 10 der Häufigkeitsverteilung befindet sich ein Großteil der gemessenen Messwertverläufe.

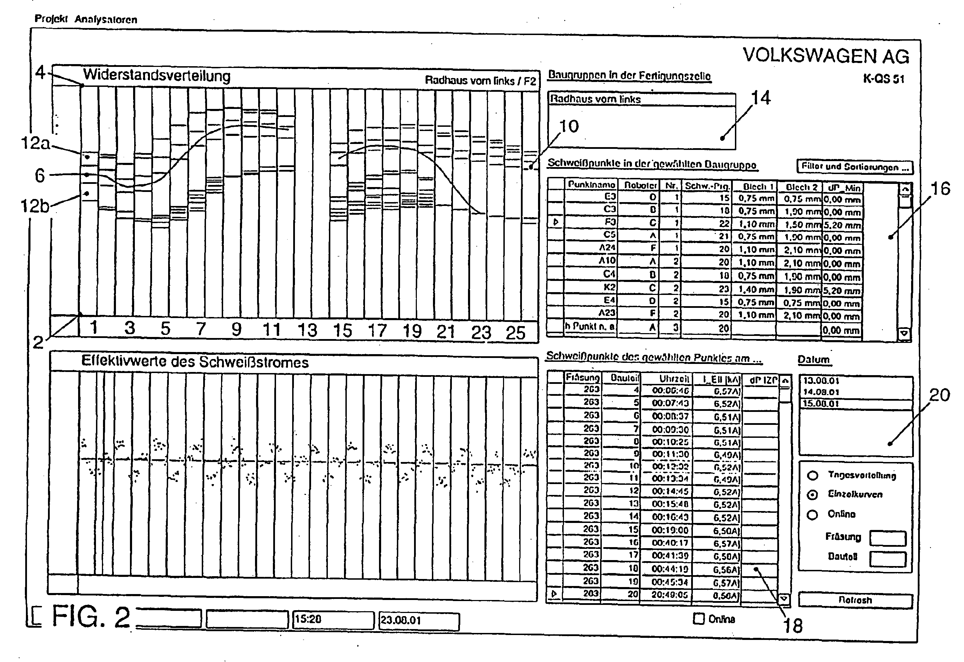

Um nun eine Aussage über die Qualität eines einzelnen Prozesses treffen zu können, wird der Verlauf einer Messwertkurve eines einzelnen Prozesses 6 im Bezug zu einer Häufigkeitsverteilung, wie in Figur 2 dargestellt, visualisiert. Im linken oberen Fenster in Figur 2 ist zu erkennen, dass sich die Messwertkurve 6 zunächst innerhalb des Kernbereichs 10 befindet. Gegen Ende der Schweißung jedoch bewegt sich die Messkurve 6 aus dem Kernbereich 10 hinaus in Richtung des unteren Grenzwertes 12b. Da gegen Ende der Schweißung die Messwertkurve von dem Maximum der Häufigkeitsverteilung stark abweicht, könnte ein fehlerhafter Schweißpunkt vorliegen.

In Fenster 14 lässt sich auswählen, welche Messwertverläufe von einzelnen Baugruppen betrachtet werden sollen. Dargestellt ist die Baugruppe "Radhaus von links". Diese Baugruppe besteht aus verschiedenen Schweißpunkten, die in Fenster 16 dargestellt sind. In Fenster 16 lassen sich die einzelnen Schweißpunkte der gewählten Baugruppe auswählen.

In Fenster 18 lassen sich einzelne Schweißprozesse eines gewählten Schweißpunktes auswählen. Dies sind jeweils aufeinander folgende Schweißungen unterschiedlicher Bauteile der Baugruppe "Radhaus". Dunkel hinterlegt ist die zwanzigste Speisung der Baugruppe "Radhaus" am Schweißpunkt F2, wie er in Fenster 16 ausgewählt ist. Der Verlauf der ausgewählten Schweißung ist im oberen linken Fenster dargestellt.

Schließlich lässt sich im Fenster 20 auswählen, welche Schweißungen welchen Tages betrachtet werden sollen und aus welchem Intervall die Häufigkeitsverteilung errechnet werden soll.

Mit Hilfe des erfindungsgemäßen Verfahrens lässt sich ein einzelner gemessener Prozessparameter im Vergleich mit einer adaptiv aus einer Vielzahl von vorhergehenden Prozessen ermittelten Häufigkeitsverteilung dieses Prozessparameters durchführen. Der Vorteil besteht darin, dass die Kosten einer Serienproduktion durch Reduzierung des Prüfaufwandes reduziert werden können und dass Konstruktionskosten gesenkt werden können, da aufgrund höherer Qualität weniger Prozessschritte nötig sind. Außerdem lässt sich die Qualität einzelner Produkte erhöhen und damit die Kundenzufriedenheit steigern.

### BEZUGSZEICHENLISTE

- 2: Laufvariable Zeit
- 4: Prozessparameterwiderstand
- 6: Messwertverlauf
- 6b: Verlauf vieler Messwerte
- 8: Streuband
- 10: Kernbereich einer Häufigkeitsverteilung
- 12a: oberer Grenzwert einer Häufigkeitsverteilung
- 12b: unterer Grenzwert einer Häufigkeitsverteilung
- 14,16,18,20: Fenster

## Patentansprüche

1. Verfahren zur Erfassung und Auswertung von Prozessdaten,
- bei dem von einer Vielzahl von Prozessen ein Verlauf eines Messwertes (6) zumindest eines Prozessparameters (4) über eine Laufvariable (2) erfasst wird,
- bei dem die erfassten Messwertverläufe (6b) gespeichert werden,
**dadurch gekennzeichnet, dass**
- aus den erfassten Messwertverläufen (6b) eine Kurvenschar ermittelt wird und
- Häufigkeitsverteilungen der Messwerte innerhalb von Intervallen der Laufvariable (2) aus der Kurvenschar errechnet werden.

2. Verfahren nach Anspruch 1, **dadurch gekennzeichnet, dass** aus der Kurvenschar ein Streuband (8) des Messwertes ermittelt wird.

3. Verfahren nach Anspruch 1 oder 2, **dadurch gekennzeichnet, dass** ein Messwertverlauf (6) eines Prozessparameters (4) eines Prozesses innerhalb der errechneten Häufigkeitsverteilung dargestellt wird.

4. Verfahren nach einem der Ansprüche 1 bis 3, **dadurch gekennzeichnet, dass** die Häufigkeitsverteilung graphisch dargestellt wird.

5. Verfahren nach einem der Ansprüche 1 bis 4, **dadurch gekennzeichnet, dass** aus einem Vergleich zwischen einem Verlauf eines Messwertes (6) eines Prozessparameters (4) eines Prozesses und einem Verlauf der errechneten Häufigkeitsverteilung eine Prozessgüte ermittelt wird.

6. Verfahren nach einem der Ansprüche 1 bis 5, **dadurch gekennzeichnet, dass** bei einem Widerstandsschweißen der Widerstandsverlauf der Schweißnaht über die Zeit erfasst wird oder dass bei einem Plasmaschweißen der Verlauf der Plasmastrahlung über den Weg erfasst wird oder dass bei einem Schraubprozess der Verlauf des Drehmomentes über den Drehwinkel erfasst wird.

7. Verfahren nach einem der Ansprüche 1 bis 6, **dadurch gekennzeichnet, dass** die Häufigkeitsverteilung von Prozessen eines Tages, einer Woche und /oder eines Monats dargestellt werden.

8. Vorrichtung zur Erfassung und Auswertung von Prozessdaten
- mit zumindest einem Sensor zur Erfassung Prozessen ein Verlauf eines Messwertes (6) zumindest eines Prozessparameters (4) über eine Laufvariable (2)),
- mit Speichermitteln zum Speichern der erfassten Messwerte,
**dadurch gekennzeichnet, dass**
- ein Berechnungsmittel zur Ermittlung einer Kurvenschar aus den erfassten Messwertverläufen (6b) eingerichtet ist, und
- das Berechnungsmitteln zur Berechnung von Häufigkeitsverteilungen der Messwerte innerhalb von Intervallen der Laufvariable (2) aus der Kurvenschar eingerichtet ist.

9. Vorrichtung nach Anspruch 8, **dadurch gekennzeichnet, dass** Visualisierungsmittel zur Visualisierung der errechneten Häufigkeitsverteilung und/oder eines Verlaufs eines Prozessparameters eines auswählbaren Prozesses vorgesehen sind.

10. Verwendung eines Verfahren nach einem der Ansprüche 1 bis 6 oder einer Vorrichtung nach einem der Ansprüche 7, 8 oder 9 in der Qualitätssicherung und/oder in der Kraftfahrzeugsproduktion.

## Claims

1. Method for the acquisition and evaluation of process data,
- in which, from a plurality of processes, a run of a measured value (6) of at least one process parameter (4) is acquired over a control variable (2),
- in which the acquired measured value runs (6b) are stored,
**characterised in that**
- an array of curves is determined from the measured value runs (6b) acquired and
- frequency distributions of the measured values are calculated within intervals of the control variable (2) from the array of curves.

2. Method according to Claim 1, **characterised in that** a scatter range (8) of the measured value is determined from the array of curves.

3. Method according to Claim 1 or 2, **characterised in that** a measured value run (6) of a process parameter (4) of a process within the calculated frequency distribution is represented.

4. Method according to any one of Claims 1 to 3, **characterised in that** the frequency distribution is represented graphically.

5. Method according to any one of Claims 1 to 4, **characterised in that** a process quality is calculated from a comparison between a run of a measured value (6) of a process parameter (4) of a process and a run of the calculated frequency distribution.

6. Method according to any one of Claims 1 to 5, **characterised in that**, during resistance welding, the resistance run of the weld seam is acquired over time, or in that during plasma welding the run of the plasma beam is acquired over the path, or **in that** during a screwing process the run of the torque is acquired over the angle of rotation.

7. Method according to any one of Claims 1 to 6, **characterised in that** the frequency distribution of processes of one day, one week and/or one month is represented.

8. Device for the acquisition and evaluation of process data
- with at least one sensor for the acquisition of processes of a run of a measured value (6) of at least one process parameter (4) over a control variable (2)),
- with storage media for storing the acquired measured values,
**characterised in that**
- calculation means are engaged for determining an array of curves from the measured value runs (6b) acquired and
- calculation means are engaged for calculating frequency distributions of the measured values within intervals of the control variable (2) from the array of curves.

9. Device according to Claim 8, **characterised in that** visualisation means are provided for visualising the calculated frequency distribution and/or a run of a process parameter of a selectable process.

10. Use of a method according to any one of Claims 1 to 6 or of a device according to any one of Claims 7, 8, or 9 in quality assurance and/or in motor vehicle production.

## Revendications

1. Procédé de détermination et d'évaluation de données de processus,
- dans lequel on détermine à partir de plusieurs processus une courbe d'évolution d'une valeur mesurée (6) d'au moins un paramètre de processus (4), par rapport à une variable de commande (2),
- dans lequel les courbes d'évolution (6b) déterminées des valeurs mesurées sont mémorisées,
**caractérisé en ce que**
- on calcule une famille de courbes à partir des courbes d'évolution (6b) déterminées des valeurs mesurées, et
- on recalcule des distributions de fréquences des valeurs mesurées à l'intérieur d'intervalles de la variable de commande (2) à partir de la famille de courbes.

2. Procédé selon la revendication 1, **caractérisé en ce que** l'on calcule une bande de dispersion (8) de la valeur mesurée à partir de la famille de courbes.

3. Procédé selon la revendication 1 ou 2, **caractérisé en ce que** l'on affiche une courbe d'évolution (6) de la valeur mesurée d'un paramètre de processus (4), d'un processus, à l'intérieur de la distribution de fréquence calculée.

4. Procédé selon l'une des revendications 1 à 3, **caractérisé en ce que** l'on affiche la fréquence de distribution sous une forme graphique.

5. Procédé selon l'une des revendications 1 à 4, **caractérisé en ce que** l'on calcule une qualité du processus à partir d'une comparaison entre une courbe d'évolution d'une valeur mesurée (6) d'un paramètre de processus (4), d'un processus, et une courbe d'évolution de la distribution de fréquence calculée.

6. Procédé selon l'une des revendications 1 à 5, **caractérisé en ce que**, au cours d'un soudage par résistance, on détermine la courbe d'évolution de la résistance du cordon de soudure en fonction du temps ou, au cours d'un soudage au plasma, on détermine la courbe d'évolution du faisceau plasmatique en fonction du trajet ou, au cours d'un processus de vissage, on détermine la courbe d'évolution du couple en fonction de l'angle de rotation.

7. Procédé selon l'une des revendications 1 à 6, **caractérisé en ce que** l'on affichage la distribution de fréquence de processus d'un jour, d'une semaine et/ou d'un mois.

8. Dispositif pour déterminer et évaluer des données de processus
- avec au moins un détecteur pour déterminer une courbe d'évolution d'une valeur de mesure (6) d'au moins un paramètre de processus (4) par rapport à une variable de commande (2),
- avec un moyen de mémorisation pour mémoriser les valeurs mesurées déterminées,
**caractérisé en ce que**
- il comprend un moyen de calcul pour déterminer une famille de courbes à partir des courbes d'évolution (6b) déterminées, et
- le moyen de calcul est prévu pour calculer des distributions de fréquences des valeurs mesurées à l'intérieur d'intervalles de la variable de commande (2), à partir de la famille de courbes.

9. Dispositif selon la revendication 8, **caractérisé en ce qu'**il comprend un moyen de visualisation pour visualiser la distribution de fréquence calculée et/ou une courbe d'évolution d'un paramètre de processus d'un processus choisi.

10. Utilisation d'un procédé selon l'une des revendications 1 à 6, ou d'un dispositif selon l'une des revendications 7, 8 ou 9 dans la surveillance de la qualité et/ou dans la production de véhicules automobiles.
